# EUROPEAN PATENT SPECIFICATION

(11) **EP 4 436 359 B1**
(45) Date of publication and mention of the grant of the patent: **05.11.2025**
(21) Application number: 22829585.3
(22) Date of filing: 23.11.2022
(51) Int. Cl.: A01D 45/06

(54) **DEVICE FOR CUTTING OFF TOPS AND/OR ROOTS OF PLANT STEMS**
VORRICHTUNG ZUM ABSCHNEIDEN VON OBERTEILEN UND/ODER WURZELN VON PFLANZENSTÄMMEN
DISPOSITIF POUR COUPER LES SOMMETS ET/OU LES RACINES DES TIGES DE PLANTES

(30) Priority: 23.11.2021 BE 202105904
(43) Date of publication of application: 02.10.2024
(73) Proprietor: Cretes NV, 8560 Gullegem (BE)
(72) Inventor: VAN PUYVELDE, Dirk, 8560 Gullegem (BE)
(74) Representative: Brantsandpatents bv
(86) International application number: PCT/IB2022/061321
(87) International publication number: WO 2023/095011

(56) References cited:
- WO-A1-2020/261177
- FR-A1- 2 866 516
- FR-A1- 3 066 881
- US-A- 5 632 135

## Description

### TECHNICAL FIELD

The invention relates to a device and a method for cutting off tops and/or roots of plant stems, more particularly stems of hemp.

### PRIOR ART

It is known from the prior art that certain plants are cultivated for their natural fibers. These natural fibers are then used, for example, for textile or insulation applications. Examples of such plants include flax, hemp, jute, manila hemp, sisal, ramie, nettle, raffia or ficus.

Certain of these plants have a rather long plant stem. The plant stem has a tip at the top that cannot be used for the production of natural fibers. An example of this is hemp. This top is preferably already cut from the plant stem during harvesting, i.e. when the plant stem is mowed or pulled out of a field. To this end, harvesters include a cutting means to cut off the top of the plant stem. One problem with this is that the plant stems are quite flexible, often causing plant stems to bend away from the cutting means during cutting, so the tops are not cut off the plant stems or instead remain attached to the plant stem in whole or in part. Another possibility is that the cutting means drags along a plant stem completely from a bundle of mown or pulled-out plant stems. All of these drawbacks result in the failure to lay down the plant stems in an orderly manner during harvesting, and in the production of the natural fibers from the plant stems, there is contamination and disturbance from the tops.

The cut off tops fall onto the field after cutting, where likewise the mown or pulled-out plant stems are deposited in swaths. The less precise the cutting off of the tops is done, the more of the cut off tops will fall on the swaths, again causing disturbance or pollution from cut off tops in both harvesting and natural fiber production. For most applications, the cut off plant stems will remain in the field for several weeks to ret. Excess leaves are known to be more likely to cause rot and are detrimental to the retting process, making it important to keep tops and plant stems separate.

Similar problems occur when a plant stem with roots is pulled out of the field and the root is only cut off after the plant stem has been pulled out.

A known machine for harvesting plant stems is described in FR3066881. This machine includes a cutting means for cutting off tops during harvesting. The tops of the plant stems are cut off before the plant stems are harvested, allowing the plant stems to bend away from the cutting means.

Another known machine is known from US5632135. This machine includes a disk for cutting off the tops of the plant stems. The tops are cut from the plant stems at an undefined and variable angle, after which the plant stems fall freely onto a support surface. This has the disadvantage that the tops are not cut accurately or completely from the plant stems.

Both WO2020/261177 and FR2866516 describe machines for harvesting hemp, where the tops are always cut by a cutting means from cut and upright plant stems. These machines have the disadvantage that the plant stems can bend away from the cutting means.

The present invention aims to solve at least some of the above problems or drawbacks.

### SUMMARY OF THE INVENTION

In a first aspect, the present invention relates to a device according to claim 1.

The first cutting means and the first pair of cutting conveyor belts or cutting conveyor chains are advantageous for the controlled cutting off of the tops or roots of the mown or pulled-out plant stems. The first cutting means is positioned between the first support surface and the first pair of cutting conveyor belts or cutting conveyor chains. The mown or pulled-out plant stems rest on the first support surface and cannot bend on this side of the first cutting means during cutting off by means of the first cutting means. One end of the mown or pulled-out plant stems with the tops or roots thereon is clamped by the first pair of cutting conveyor belts or cutting conveyor chains. Also on this side the mown or pulled-out plant stems cannot bend during cutting off by means of the first cutting means, but also cannot curl up. This makes it possible to carefully cut off the tops or roots from the mown or pulled-out plant stems using the first cutting means. There is no disturbance from uncut tops or roots of the plant stems. The plant stems are not damaged by torn off tops or roots and no plant stems or parts of plant stems are lost. A higher production of natural fibers is achieved, wherein the quality of the natural fibers is also increased.

Preferred embodiments of the device are set out in claims 2-9.

A particular preferred embodiment of the invention relates to a device according to claim 4. Cut-off tops fall through the discharge gate onto a field next to a swath of deposited plant stems. This prevents plant stems from mixing with, for example, plant leaves from the tops or with roots, so that rotting is avoided, and a higher quality is achieved. There is also no contamination from the tops and/or roots during the production of the natural fibers.

In a second aspect, the present invention relates to a method according to claim 10.

This method has the advantage, among other things, that when cutting off the tops and/or the roots, the mown or pulled-out plant stems rest on the first support surface on a first side of the first cutting means and that the mown or pulled-out plant stems are clamped by the first pair of cutting conveyor belts or cutting conveyor chains, so that the tops and/or roots are carefully cut from the mown or pulled out plant stem. There is no disturbance or pollution from the tops and/or roots of the plant stems. The plant stems are not damaged by torn off tops and/or roots and no plant stems or parts of plant stems are lost. A higher production of natural fibers is achieved, wherein the quality of the natural fibers is also increased.

Preferred embodiments of the method are described in the dependent claims 11-14.

In a third aspect the present invention relates to a use according to claim 15.

This use results in advantageous harvesting of hemp stems. Hemp stems are plants that are often grown for their natural fibers. Hemp stems are sometimes so long that on top of two lengths usable for fiber production, a too large top remains. This top is also less suitable for the production of natural fibers. In addition, plant leaves from the tops can cause rotting of the plant stems during the retting process in the field. Therefore, it is necessary to separate these tops from the hemp stems. However, hemp stalks are also very flexible, so that when they are cut, the hemp stalks bend and the tops are frequently not cut from the hemp stem or rather are torn from it, disturbing the arrangement when deposited in swaths in the field and resulting in a useful part of the hemp stem being lost or damaged. On the other hand, due to the very flexible hemp stem, it is also possible that the hemp stem is pulled from a bundle of hemp stems by a cutting means when cutting off the tops. Hemp stems are in certain cases pulled from a field with the roots during harvesting. The root cannot be used for the production of natural fibers either. The use according to claim 15 makes it possible to carefully cut off the top and/or the root of the mown or pulled out hemp stems, which results in a higher production of natural fibers and also increases the quality of the natural fibers.

### DESCRIPTION OF THE FIGURES

**Figure 1** shows a side view of a device for cutting off tops of plant stems according to an embodiment of the present invention.
**Figure 2** shows a view along axis A-A of a device for cutting off tops of plant stems according to an embodiment of the present invention.
**Figure 3** shows a view along axis B-B of a device for cutting off tops of plant stems according to an embodiment of the present invention.
**Figure 4** shows a view along axis C-C of a device for cutting off tops of plant stems according to an embodiment of the present invention.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise," "comprising," "consist of," "consisting of," "provided with," "include," "including," "contain," "containing," are synonyms and are inclusive or open terms that indicate the presence of what follows, and which do not exclude or prevent the presence of other components, characteristics, elements, members, steps, as known from or disclosed in the prior art.

Quoting numerical ranges by endpoints includes all integers, fractions and/or real numbers between the endpoints, these endpoints included.

The term "natural fibers" is defined as fibers of natural origin, more preferably vegetable origin. Examples of natural fibers include flax, hemp, jute, manila hemp, sisal, ramie, nettle, raffia, or ficus.

The term "swath" can refer to a strip of crops that is laid back on a harvest site, such as a field, when harvesting. For example, crops are laid in swaths to allow the crops to dry and/or ret.

In a first aspect, the invention relates to a device for cutting off tops and/or roots from plant stems.

According to a preferred embodiment, the device comprises a first support surface, a first group of mowing conveyor belts and/or mowing conveyor chains, a first cutting means and a first pair of cutting conveyor belts or cutting conveyor chains.

The first support surface is suitable for supporting mown or pulled-out plant stems in a lying position. The plant stems have been mowed in a standing position near the root or have been pulled out of a field with the roots. The first group of mowing conveyor belts and/or mowing conveyor chains is suitable for parallel clamping and rotating of the mowed or pulled-out plant stems from the standing to the lying position on the first support surface while transporting the mown or pulled-out plant stems to the first horizontal support surface. This is advantageous for parallel orientation of the mown or pulled-out plant stems so that they can be laid down in a swath on a field after mowing or being pulled out. Laying down parallel in a swath allows the mown or pulled-out plant stems to be mechanically rolled up from the field parallel into bales. The first support surface preferably comprises conveyor belts or conveyor chains for advancing the mown or pulled-out plant stems along the said longitudinal direction.

The first cutting means is suitable for cutting off tops and/or roots from plant stems. Plant stems are harvested for the production of natural fibers, for example for use in textiles or insulation. The plant stems typically first undergo a retting process in a field, which can be disturbed by the presence of, for example, an excess of leaves from the tops. The tops and roots are usually not suitable for textiles or insulation and form a contaminant for the production of natural fibers that must be removed during the further production process. By correctly cutting off the tops and/or roots of the mown or pulled-out plant stems, there is no pollution during the production of natural fibers due to the mixing of tops and/or roots with the plant stems. It will be apparent to one skilled in the art that if the plant stems have been mowed, the roots have already been cut off from the plant stems during mowing. Cutting off tops and/or roots is additionally advantageous because the mown or pulled-out plant stems can hereby be better oriented parallel and can be placed in a swath on a field.

The first pair of cutting conveyor belts is suitable for clamping the mown or pulled-out plant stems during cutting. To this end, the first pair comprises a first conveyor belt or conveyor chain and a second conveyor belt or conveyor chain. The first conveyor belt or conveyor chain and the second conveyor belt or conveyor chain each form a loop which extends in the same longitudinal direction. Wheels or rollers are placed within the loops. Axles of the wheels or rollers are transverse to the loops and transverse to said longitudinal direction. The loops can be rotated by the wheels or rollers. Preferably, at least one of the wheels or rollers of at least the loop formed by the first conveyor belt or conveyor chain or the loop formed by the second conveyor belt or conveyor chain is coupled to a drive. The drive is, for example, an electric motor or a hydraulic motor. The axles of the wheels or rollers are parallel to the first horizontal support surface. There is a gap between the loop formed by the first conveyor belt or conveyor chain and the loop formed by the second conveyor belt or conveyor chain. This gap is suitable for clamping and carrying along tops, roots and/or part of a plant stem from the mown or pulled-out plant stems. The gap is preferably at a level with the first support surface. The first couple of cutting conveyor belts or cutting conveyor chains extend in a longitudinal direction along the first support surface. This longitudinal direction is equal to the longitudinal direction in which the loops formed by the first conveyor belt or conveyor chain and the second conveyor belt or conveyor chain extend.

The first cutting means is positioned in a width direction between the first support surface and the first pair of cutting conveyor belts or cutting conveyor chains. The width direction is transverse to said longitudinal direction and parallel to the first support surface. The mown or pulled-out plant stems are positioned parallel to the first support surface according to the width direction.

The mown or pulled-out plant stems rest on the first support surface and cannot bend on this side of the first cutting means during cutting with the aid of the first cutting means. One end of the mown or pulled-out plant stems with the tops or roots thereon is clamped by the first pair of cutting conveyor belts or cutting conveyor chains. It will be apparent to one skilled in the art that, depending on a length of the mown or pulled-out plant stems, the tops, roots or part of the plant stems are clamped between the first pair of cutting conveyor belts or cutting conveyor chains. Also on this side of the first cutting means, the mown or pulled-out plant stems cannot bend during cutting with the aid of the first cutting means, but also cannot curl up either. This makes it possible to carefully cut off the tops or roots from the mown or pulled-out plant stems using the first cutting means. The plant stems are not damaged by torn off tops or roots and no plant stems or parts of plant stems are lost due to being dragged in whole or in part from a pile of mown or pulled-out plant stems by the first cutting means. A higher production of natural fibers is achieved, wherein the quality of the natural fibers is also increased.

According to one embodiment, the gap between the first conveyor belt or conveyor chain and the second conveyor belt or conveyor chain is preferably at most 5 cm, more preferably at most 4 cm, even more preferably at most 3 cm and even more preferably at most 1 cm. This is advantageous for firmly clamping a top, root and/or part of a plant stem of the mown or pulled-out plant stems between the first conveyor belt or conveyor chain and the second conveyor belt or conveyor chain. According to one embodiment, the first pair of cutting conveyor belts or cutting conveyor chains comprises a spring, the first conveyor belt or conveyor chain and the second conveyor belt or conveyor chain being pressed towards or onto each other by pretension by the spring. The first conveyor belt or conveyor chain and the second conveyor belt or conveyor chain preferably lie against each other. The first conveyor belt or conveyor chain and the second conveyor belt or conveyor chain are pressed apart by a bundle of plant stems. This is advantageous for absorbing variations in thickness of a bundle of mown or pulled-out plant stems.

According to one embodiment, the first cutting means comprises a knife. The knife comprises a blade. The blade is transverse to a plane parallel to the first support surface and is directed towards the first group of mowing conveyor belts and/or mowing conveyor chains. By moving the mown or pulled-out plant stems along the said longitudinal direction over the first support surface, the tops or roots of the mown or pulled-out plant stems are cut off.

According to one embodiment, the first cutting means comprises shears. The shears are transverse to a plane parallel to the first support surface. A gap between shear blades faces the first group of mowing conveyor belts and/or mowing conveyor chains. By moving the mown or pulled-out plant stems along the said longitudinal direction over the first support surface and by opening and closing the shears, the tops or roots of the mown or pulled-out plant stems are cut off. In this embodiment, shears can be both classic shears with two legs and a hinge point, and shears with two vertically arranged legs, where one or both legs can be moved in a height direction, transverse to the longitudinal direction, comparable to hedge shears. A pair of shears can comprise several pairs of two legs. The legs of the shears are preferably coupled to a drive. This embodiment is advantageous compared to a previously described embodiment with a knife because tops or roots are also cut if, for instance, mown or pulled-out plant stems slip over the first support surface during travel.

According to a preferred embodiment, the first cutting means comprises a rotatable disk, the rotatable disk comprising a cutting edge around its periphery. Preferably, the rotatable disk comprises cutting teeth around its periphery. The rotatable disk is transverse to a plane parallel to the first support surface. A rotatable disk has a similar advantage to a previously described embodiment comprising shears. A rotatable disk has the additional advantage that with a large supply of mown or pulled-out plant stems, the rotation of the rotatable disk is not hindered, in contrast to, for example, the legs of a pair of shears, which can be blocked.

According to a preferred embodiment, the device comprises an additional pair of cutting conveyor belts or cutting conveyor chains. The additional pair of cutting conveyor belts or cutting conveyor chains is suitable for even better clamping of the mown or pulled-out plant stems. To this end, the additional pair comprises a first conveyor belt or conveyor chain and a second conveyor belt or conveyor chain. The additional pair of cutting conveyor belts or cutting conveyor chains is similar to the first pair of cutting conveyor belts or cutting conveyor chains, as in the embodiments described above or below. Features of the first pair of cutting conveyor belts or cutting conveyor chains can therefore also apply to the additional pair of cutting conveyor belts or cutting conveyor chains. Non-limiting examples of such features are loops formed by conveyor belts or conveyor chains and their mutual positions, the presence of rollers or wheels, the presence of a gap, the positioning of the gap relative to the first support surface, etc. The additional pair of cutting conveyor belts or cutting conveyor chains extends according to said longitudinal direction along the first support surface. The additional pair of cutting conveyor belts or cutting conveyor chains is positioned between the first support surface and the first cutting means according to the said width direction.

This embodiment is advantageous because during the cutting off of roots or tops on the side of the first support surface, mown or pulled-out plant stems are not only supported by the first support surface, but are also clamped by the additional pair of cutting conveyor belts or cutting conveyor chains, so that the mown or pulled-out plant stems cannot curl up or shift on the first support surface while cutting off tops or roots on this side. As a result, the tops or roots are cut off even more accurately compared to a device with only a first pair of cutting conveyor belts or cutting conveyor chains. This embodiment is also advantageous in order to prevent mown or pulled-out plant stems on the first support surface from shifting and coming to lie at an angle during cutting, as a result of which the mown and pulled-out plant stems may be placed less parallel on the field and will not form a nice swath.

According to a preferred embodiment, the device comprises an additional cutting means. The additional cutting means is similar to previously described embodiments of the first cutting means. Features of the first cutting means can therefore also apply to the additional cutting means. The additional cutting means is positioned widthwise between the first cutting means and the first pair of cutting conveyor belts or cutting conveyor chains. To this end, the first cutting means is placed further from the first support surface, so as to make room for the additional cutting means. This embodiment is advantageous in case the mown or pulled-out plant stems are very long or the mown or pulled-out plant stems have very long tops or roots. Due to the additional cutting means, the cut off tops or roots are reduced in length, so that the cut off tops or roots can be disposed of more easily without clogging the device.

According to a further embodiment, the device comprises an intermediate pair of cutting conveyor belts or cutting conveyor chains. The intermediate pair of cutting conveyor belts or cutting conveyor chains is positioned widthwise between the first cutting means and the additional cutting means. The intermediate pair of cutting conveyor belts or cutting conveyor chains is similar to the first pair of cutting conveyor belts or cutting conveyor chains, as in the embodiments described above or below. Features of the first pair of cutting conveyor belts or cutting conveyor chains can therefore also apply to the intermediate pair of cutting conveyor belts or cutting conveyor chains. The intermediate pair of cutting conveyor belts or cutting conveyor chains is suitable for clamping the mown or pulled-out plant stems between the first cutting means and the additional cutting means. As a result, the mown or pulled-out plant stems cannot curl up on the side of the additional cutting means when the tops or roots are cut off by the first cutting means, so that the previously described advantages are retained.

According to a preferred embodiment, the device comprises a discharge gate for discharging tops and/or roots. A surface formed by the discharge gate forms an angle with the first support surface. The discharge gate extends in a direction transverse to the longitudinal direction and away from the first support surface. The angle between the surface formed by the discharge gate and a perpendicular to the first support surface is at least 5° and at most 45°. The discharge gate is positioned below the first support surface. Preferably, the discharge gate comprises upright side walls to guide cut off tops and/or roots over the surface formed by the discharge gate.

The angle between the surface formed by the discharge gate and a perpendicular to the first support surface is preferably at least 10°, more preferably at least 15°, even more preferably at least 20° and even more preferably at least 25°.

The angle between the surface formed by the discharge gate and a perpendicular to the first support surface is preferably at most 40°, more preferably at most 35° and even more preferably at most 30°.

Cut-off tops and/or roots fall through the discharge gate onto a field next to a swath of deposited plant stems. This prevents plant stems from mixing with, for example, plant leaves from the tops or with roots, so that rotting is avoided, and a higher quality is achieved. There is also no contamination from the tops and/or roots during the production of the natural fibers. An angle of at least 5° and at most 45° is advantageous because it means that the cut off tops and/or roots fall sufficiently quickly and safely after cutting under the influence of gravity alone, so that the discharge gate is not blocked by cut off tops and/or roots. An angle of at least 5° and a maximum of 45° also allows the cut-off tops and/or roots to fall in such a way that the cut-off tops and/or roots do not fall under a swath to be placed, but also do not fall on an adjacent swath.

According to a preferred embodiment, the device comprises a chopper for chopping tops and/or roots. A chopper is advantageous for reducing the volume of cut off tops and/or roots.

The chopper can be combined with a discharge gate from a previously described embodiment. In that case, the chopper is preferably mounted above the discharge gate and a discharge of the chopper opens onto the discharge gate. Alternatively, the discharge gate opens onto a feed of the chopper. The discharge of the chopper is positioned next to a swath. Chopped tops and/or roots fall onto the field next to the swath.

According to one embodiment, the device comprises a discharge belt or screw conveyor for discharging cut off tops and/or roots. The discharge belt or screw conveyor discharges the cut off tops and/or roots in a direction transverse to the longitudinal direction. The cut off tops and/or roots fall next to the swath on the field. Alternatively, the device comprises a storage bunker for storage of cut off tops and/or roots. In that case, the discharge belt or screw conveyor is suitable for discharging the cut off tops or roots of a cutting means to the storage bunker. It is clear that in this case the discharge belt or screw conveyor does not necessarily discharge the cut off tops and/or roots in a direction transverse to the longitudinal direction. A storage bunker is particularly beneficial in the case of hemp, where cut off tops are useful for manufacturing CBD oil (cannabidiol). The bunker may also belong to a vehicle driving next to the device, such as a towed cart or a truck.

This embodiment may or may not be combined with previously described embodiments comprising a chopper or a discharge gate, for example where a chopper reduces the volume of the cut off tops and/or roots before being discharged by the discharge belt or screw conveyor or, for example, wherein the discharge gate discharges the cut off tops and/or roots to the discharge belt or screw conveyor.

According to a preferred embodiment, the device comprises a second cutting means and a second pair of cutting conveyor belts or cutting conveyor chains on a side of the first support surface, lying opposite a side along which the first cutting means is positioned.

The second cutting means is similar to previously described embodiments of the first cutting means. Features of the first cutting means can therefore also apply to the second cutting means.

The second pair of cutting conveyor belts or cutting conveyor chains is suitable for clamping pulled-out plant stems. To this end, the second pair comprises a first conveyor belt or conveyor chain and a second conveyor belt or conveyor chain. The second pair of cutting conveyor belts or cutting conveyor chains is similar to the first pair of cutting conveyor belts or cutting conveyor chains, as in the embodiments described above or below. Features of the first pair of cutting conveyor belts or cutting conveyor chains can therefore also apply to the second pair of cutting conveyor belts or cutting conveyor chains. The second pair of cutting conveyor belts or cutting conveyor chains extends according to said longitudinal direction along the first support surface. The second cutting means is positioned in said width direction between the first support surface and the second pair of cutting conveyor belts or cutting conveyor chains.

This embodiment is particularly advantageous for cutting off tops and roots of pulled-out plant stems, wherein for instance the tops are cut off by the first cutting means and the roots are cut off by the second cutting means, or vice versa. This prevents tops and roots from being a disturbance and pollution during the production of plant fibers.

It will be apparent to one skilled in the art that previously described embodiments in combination with the first cutting means and the first pair of cutting conveyor belts or cutting conveyor chains can also apply mutatis mutandis to the second cutting means and the second pair of cutting conveyor belts or cutting conveyor chains. Non-limitative examples of this are an additional pair of cutting conveyor belts or cutting conveyor chains, an additional cutting means, a discharge gate, a chopper, a discharge belt or screw conveyor, etc.

According to a preferred embodiment, the device comprises a first horizontal mowing means and a second horizontal support surface.

The first horizontal mowing means is suitable for dividing the plant stems into two lengths. The first horizontal mowing means mows an upper part of the plant stems in a standing position. The first horizontal mowing means preferably mows the plant stems at the height of the center of the plant stems.

The second support surface is suitable for supporting in a lying position a part of the pulled-out plant stems that have been divided into two lengths, namely a lower part of the plant stems. The lower part of the plant stems is pulled out as in a previously described embodiment.

The device comprises a second group of mowing conveyor belts and/or mowing conveyor chains suitable for parallel clamping and rotating said part of the pulled-out plant stems divided into two lengths, namely the lower part of the plant stems, from the standing to the lying position on the second support surface during the transport of said part of the pulled-out plant stems divided into two lengths from the first horizontal mowing means to the second horizontal support surface. The second support surface preferably comprises conveyor belts or conveyor chains for advancing the pulled-out plant stems along the said longitudinal direction.

As in a previously described embodiment, the upper part of the plant stems is transported by the first group of mowing conveyor belts and/or mowing conveyor chains to the first support surface, where the tops are cut off from the upper part of the plant stems by the first cutting means.

The device further comprises a second cutting means and a second pair of cutting conveyor belts or cutting conveyor chains.

The second cutting means is similar to previously described embodiments of the first cutting means. Features of the first cutting means can therefore also apply to the second cutting means.

The second pair of cutting conveyor belts or cutting conveyor chains is suitable for clamping pulled-out plant stems. To this end, the second pair comprises a first conveyor belt or conveyor chain and a second conveyor belt or conveyor chain. The second pair of cutting conveyor belts or cutting conveyor chains is similar to the first pair of cutting conveyor belts or cutting conveyor chains, as in the embodiments described above or below. Features of the first pair of cutting conveyor belts or cutting conveyor chains can therefore also apply to the second pair of cutting conveyor belts or cutting conveyor chains. The second pair of cutting conveyor belts or cutting conveyor chains extends according to said longitudinal direction along the second support surface. The second cutting means is positioned in said width direction between the second support surface and the second pair of cutting conveyor belts or cutting conveyor chains. The second cutting means is suitable for cutting the roots off the lower part of the plant stems.

The first pair of cutting conveyor belts or cutting conveyor chains and the second pair of cutting conveyor belts or cutting conveyor chains are placed on opposite sides of the device. This is advantageous in case the upper part of the plant stems is rotated in the same direction as the lower part of the plant stems from the standing to the lying position by mowing conveyor belts and/or mowing conveyor chains. As a result, roots and tops lie on opposite sides of the device.

Alternatively and preferably, the first pair of cutting conveyor belts or cutting conveyor chains and the second pair of cutting conveyor belts or cutting conveyor chains are placed on the same side of the device. This is advantageous in case the upper part of the plant stems is rotated in a direction opposite to the lower part of the plant stems from the standing to the lying position by mowing conveyor belts and/or mowing conveyor chains. As a result, roots and tops lie on the same side of the device. This is particularly advantageous because it allows cut-off tops and roots to be discharged on the same side of the device and to fall onto a field next to a swath, and that a single means for the removal of tops and roots can possibly be used.

This embodiment is particularly advantageous for cutting off tops and roots of pulled-out plant stems, the tops being cut off by the first cutting means and the roots being cut off by the second cutting means. This prevents tops and roots from being a disturbance and pollution during the production of plant fibers. This embodiment is also advantageous in the case of very long plant stems, such as for instance hemp, because dividing the plant stems into two lengths, for instance a maximum of one and a half meters, makes the plant stems easier to manipulate.

It will be apparent to one skilled in the art that previously described embodiments in combination with the first cutting means and the first pair of cutting conveyor belts or cutting conveyor chains can also apply mutatis mutandis to the second cutting means and the second pair of cutting conveyor belts or cutting conveyor chains. Non-limitative examples of this are an additional pair of cutting conveyor belts or cutting conveyor chains, an additional cutting means, a discharge gate, a chopper, a discharge belt or screw conveyor, etc.

It will also be apparent to one skilled in the art that the device can comprise a second horizontal mowing means, the second mowing means being suitable for mowing plant stems above the root. In that case it is not necessary for the device to comprise both a first and a second cutting means. A previously described embodiment in which the device comprises a first cutting means for cutting off tops is sufficient in that case.

According to a preferred embodiment, the first conveyor belt or conveyor chain and the second conveyor belt or conveyor chain of a pair of cutting conveyor belts or cutting conveyor chains are longitudinally offset from each other. This embodiment is therefore applicable for a first pair of cutting conveyor belts or cutting conveyor chains, a second pair of cutting conveyor belts or cutting conveyor chains, an additional pair of cutting conveyor belts or cutting conveyor chains or an intermediate pair of cutting conveyor belts or cutting conveyor chains. This embodiment is advantageous because mown or pulled-out plant stems are first carried along by, for example, the first conveyor belt or conveyor chain and only then by the second conveyor belt or conveyor chain. This allows a smooth transition of the mown or pulled-out plant stems into the gap between the first conveyor belt or conveyor chain and the second conveyor belt or conveyor chain, which greatly reduces the risk of blocking or jamming of mown or pulled-out plant stems between the first conveyor belt or conveyor chain and the second conveyor belt or conveyor chain.

In a second aspect, the invention relates to a method for cutting off tops and/or roots from plant stems.

In a preferred embodiment, the method comprises the steps of:
- mowing or pulling out the plant stems;
- clamping and rotating the cut or pulled-out plant stems in parallel from a standing to a lying position while transporting the cut or pulled-out plant stems to a first horizontal support surface;
- cutting off the tops or roots of the mown or pulled-out plant stems.

The tops or roots are cut off from the mown or pulled-out plant stems using a first cutting means. The mown or pulled-out plant stems are herein clamped between a first pair of cutting conveyor belts or cutting conveyor chains.

To this end, the first pair comprises a first conveyor belt or conveyor chain and a second conveyor belt or conveyor chain. The first conveyor belt or conveyor chain and the second conveyor belt or conveyor chain each form a loop which extends in the same longitudinal direction. Wheels or rollers are placed within the loops. Axles of the wheels or rollers are transverse to the loops and transverse to said longitudinal direction. The loops rotate around the wheels or rollers. Preferably, at least one of the wheels or rollers of at least the loop formed by the first conveyor belt or conveyor chain or the loop formed by the second conveyor belt or conveyor chain is driven. It is driven, for example, by an electric motor or by a hydraulic motor. The axles of the wheels or rollers are parallel to the first horizontal support surface. There is a gap between the loop formed by the first conveyor belt or conveyor chain and the loop formed by the second conveyor belt or conveyor chain. Tops, roots and/or part of a plant stem of the mown or pulled-out plant stems are clamped in this gap and taken along. The gap is preferably at a level with the first support surface. The first couple of cutting conveyor belts or cutting conveyor chains extend in a longitudinal direction along the first support surface. This longitudinal direction is equal to the longitudinal direction in which the loops formed by the first conveyor belt or conveyor chain and the second conveyor belt or conveyor chain extend.

The first cutting means is positioned in a width direction between the first support surface and the first pair of cutting conveyor belts or cutting conveyor chains. The width direction is transverse to said longitudinal direction and parallel to the first support surface. The mown or pulled-out plant stems are positioned parallel to the first support surface according to the width direction.

The mown or pulled-out plant stems are preferably arranged parallel to the width direction on the first support surface.

This method has the advantage, among other things, that when cutting off the tops and/or the roots, the mown or pulled-out plant stems rest on the first support surface on a first side of the first cutting means and that the mown or pulled-out plant stems are clamped by the first pair of cutting conveyor belts or cutting conveyor chains, so that the tops and/or roots are carefully cut from the mown or pulled out plant stem. There is no disturbance and pollution by tops or roots of the plant stems. There is no mixing of plant stems with, for example, plant leaves from the tops or roots, which prevents rotting during a retting process on a field. The plant stems are not damaged by torn off tops or roots and no plant stems or parts of plant stems are lost. A higher production of natural fibers is achieved, wherein the quality of the natural fibers is also increased.

According to a preferred embodiment, the tops and/or roots are removed after cutting with the aid of a discharge gate.

A surface formed by the discharge gate forms an angle with the first support surface. The discharge gate extends in a direction transverse to the longitudinal direction and away from the first support surface. The angle between the surface formed by the discharge gate and a perpendicular to the first support surface is at least 5° and at most 45°. The discharge gate is positioned below the first support surface. Preferably, the discharge gate comprises upright side walls to guide cut off tops and/or roots over the surface formed by the discharge gate.

By discharging cut-off tops and/or roots using the discharge gate, the cut-off tops and/or roots fall onto a field next to a swath of deposited plant stems. This prevents plant stems from mixing with, for example, plant leaves from the tops or with roots, so that rotting is avoided, and a higher quality is achieved. There is also no contamination from the tops and/or roots during the production of the natural fibers. An angle of at least 5° and at most 45° is advantageous because it means that the cut off tops and/or roots fall sufficiently quickly after cutting under the influence of gravity alone, so that the discharge gate is not blocked by cut off tops and/or roots. An angle of at least 15° and a maximum of 45° also allows the cut-off tops and/or roots to fall in such a way that the cut-off tops and/or roots do not fall under a swath to be placed, but also do not fall on an adjacent swath.

According to a preferred embodiment, the tops and roots are cut from the pulled-out plant stems. The roots are cut from the pulled-out plant stems using a second cutting means. The pulled-out plant stems are clamped between a second pair of cutting conveyor belts or cutting conveyor chains. The second pair of cutting conveyor belts or cutting conveyor chains comprises a first conveyor belt or conveyor chain and a second conveyor belt or conveyor chain. The second pair of cutting conveyor belts or cutting conveyor chains extends according to the longitudinal direction along the first support surface. The second cutting means and the second pair of cutting conveyor belts or cutting conveyor chains are positioned on a side of the first support surface, lying opposite a side along which the first cutting means is positioned. The second cutting means is positioned in the width direction between the first support surface and the second pair of cutting conveyor belts or cutting conveyor chains.

This embodiment is particularly advantageous for cutting off tops and roots of pulled-out plant stems, the tops being cut off by the first cutting means and the roots being cut off by the second cutting means. This prevents the tops and roots from disrupting and polluting the production of plant fibers.

According to a preferred embodiment, the method comprises the additional steps of dividing the plant stems into two lengths, clamping in parallel and rotating a part of the pulled-out plant stems that have been divided into two lengths from a standing to a lying position while transporting said part of the pulled-out plant stems that have been divided into two lengths to a second horizontal support surface and cutting roots with the aid of a second cutting means from said part of the pulled-out plant stems that have been divided into two lengths.

The plant stems are preferably divided into two lengths by means of a first horizontal mowing means. The first horizontal mowing means mows an upper part of the plant stems in a standing position. The first horizontal mowing means preferably mows the plant stems at the height of the center of the plant stems. A lower part of the plant stems is pulled out as in a previously described embodiment.

Said part of the pulled-out plant stems divided into two lengths, namely the lower part of the plant stems, are preferably arranged parallel to the width direction on the second support surface.

The pulled-out plant stems that have been divided into two lengths are clamped between a second pair of cutting conveyor belts or cutting conveyor chains. The second pair of cutting conveyor belts or cutting conveyor chains comprises a first conveyor belt or conveyor chain and a second conveyor belt or conveyor chain. The second pair of cutting conveyor belts or cutting conveyor chains extends according to the longitudinal direction along the second support surface. The second cutting means is positioned in the width direction between the second support surface and the second pair of cutting conveyor belts or cutting conveyor chains.

The first pair of cutting conveyor belts or cutting conveyor chains and the second pair of cutting conveyor belts or cutting conveyor chains are disposed on opposite sides along the width direction of the first support surface and the second support surface, respectively. This is advantageous in case the upper part of the plant stems is rotated in a similar direction as the lower part of the plant stems from the standing to the lying position. As a result, tops and roots lie on opposite sides of the first support surface and the second support surface, respectively.

Alternatively and preferably, the first pair of cutting conveyor belts or cutting conveyor chains and the second pair of cutting conveyor belts or cutting conveyor chains are placed on the same side along the width direction of the first support surface and the second support surface, respectively. This is advantageous in case the upper part of the plant stems is rotated in a direction opposite to the lower part of the plant stems from the standing to the lying position by mowing conveyor belts and/or mowing conveyor chains. As a result, tops and roots lie on the same side of the first support surface and the second support surface, respectively. This is particularly advantageous as it allows cut-off tops and roots to be discharged on the same side and to fall onto a field next to a swath.

As in a previously described embodiment, the upper part of the plant stems is transported to the first support surface, where the tops are cut off from the upper part of the plant stems by the first cutting means.

This embodiment is particularly advantageous for cutting off tops and roots of pulled-out plant stems, the tops being cut off by the first cutting means and the roots being cut off by the second cutting means. This prevents tops and roots from being a disturbance and pollution during the production of plant fibers. This embodiment is also advantageous in the case of very long plant stems, such as for instance hemp, because dividing the plant stems into two lengths, for instance a maximum of one and a half meters, makes the plant stems easier to manipulate.

According to a preferred embodiment, the tops and/or roots of the mown or pulled-out plant stems are cut a second time with the aid of an additional cutting means. The additional cutting means is positioned widthwise between the first cutting means and the first pair of cutting conveyor belts or cutting conveyor chains. It will be apparent to one skilled in the art that if both tops and roots are cut off using a first and a second cutting means, and both the tops and roots must be cut a second time, an additional cutting means is positioned both between the first cutting means and the first pair of cutting conveyor belts or cutting conveyor chains and between the second cutting means and the second pair of cutting conveyor belts or cutting conveyor chains.

This embodiment is advantageous in case the mown or pulled-out plant stems are very long or the mown or pulled-out plant stems have very long tops or roots. The additional cutting means reduces the length of the cut-off tops or roots, making it easier to dispose of the cut-off tops or roots.

One skilled in the art will appreciate that a method according to the second aspect is preferably performed using a device according to the first aspect and that a device according to the first aspect is preferably configured for performing a method according to the second aspect. Each feature described in this document, both above and below, can therefore relate to any of the three aspects of the present invention.

In a third aspect, the invention relates to a use of a device according to the first aspect or a method according to the second aspect for cutting off tops and/or roots of hemp stems.

This use results in advantageous harvesting of hemp stems. Hemp stems are plants that are often grown for their natural fibers. Hemp stems are sometimes so long that on top of two lengths usable for fiber production, a too large top remains. This top is also less suitable for the production of natural fibers. In addition, plant leaves from the tops can cause rotting of the plant stems during the retting process in the field. Therefore, it is necessary to separate these tops from the hemp stems. However, hemp stalks are also very flexible, so that when they are cut, the hemp stalks bend and the tops are frequently not cut from the hemp stem or rather are torn from it, disturbing the arrangement when deposited in swaths in the field and resulting in a useful part of the hemp stem being lost or damaged. On the other hand, due to the very flexible hemp stem, it is also possible that the hemp stem is pulled from a bundle of hemp stems by a cutting means when cutting off the tops. Hemp stems are in certain cases pulled from a field with the roots during harvesting. The root cannot be used for the production of natural fibers either. By a use according to the third aspect, it is possible to carefully cut off the top and/or the root of the mown or pulled-out hemp stems, which results in a higher production of natural fibers and also increases the quality of the natural fibers.

In what follows, the invention is described by way of non-limiting figures illustrating the invention, and which are not intended to and should not be interpreted as limiting the scope of the invention.

### DESCRIPTION OF THE FIGURES

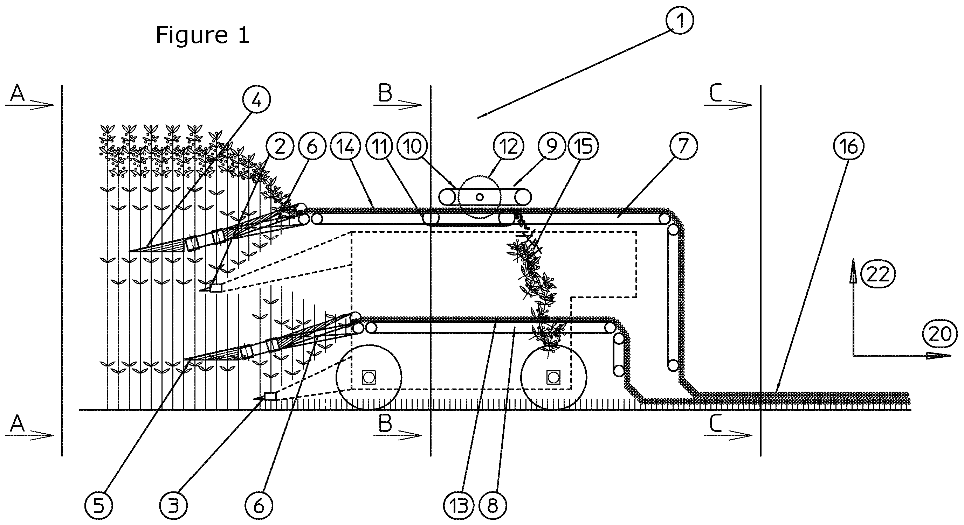

**Figure 1** shows a side view of a device for cutting off tops of plant stems according to an embodiment of the present invention.

The device (1) comprises a first distributor (4) for distributing plant stems to cutting elements of a first horizontal cutter bar (2). The first horizontal cutter bar (2) is the first horizontal mowing means. The first horizontal cutter bar (2) divides plant stems into two lengths by mowing an upper part (14) of the plant stems. The upper part (14) of the plant stems is clamped in parallel with the help of mowing conveyor belts or mowing transport chains (6) and rotated from a standing to a lying position while transporting the upper part (14) of the plant stems to a first horizontal support surface (7). This is a first group of mowing conveyor belts or mowing transport chains (6). The device (1) comprises a first pair of cutting conveyor belts or cutting conveyor chains (9) and a first cutting means (12). The first pair of cutting conveyor belts or cutting conveyor chains (9) is suitable for clamping the upper part (14) of the plant stems during the cutting off of tops (15) from the plant stems. The first pair of cutting conveyor belts or cutting conveyor chains (9) comprises a first conveyor belt or conveyor chain (10) and a second conveyor belt or conveyor chain (11). The first pair of cutting conveyor belts or cutting conveyor chains (9) extends in a longitudinal direction (20) along the first support surface (7). The first cutting means (12) is a rotatable disk comprising a cutting edge around its periphery. The tops (15) are cut off by the first cutting means (12) from the upper part (14) of the plant stems and fall down. The device (1) comprises a second distributor (5) for distributing plant stems to cutting elements of a second horizontal cutter bar (3). The second horizontal cutter bar (3) is the second horizontal mowing means. The second horizontal cutter bar (3) mows plant stems above their roots. As a result, in a device according to the present embodiment, a second cutting means for cutting off the roots is not necessary. A lower part (13) of the plant stems is clamped in parallel using mowing conveyor belts or mowing transport chains (6) and rotated from a standing to a lying position while transporting the lower part (13) of the plant stems to a second horizontal support surface (8). This is a second group of mowing conveyor belts or mowing transport chains (6). The second horizontal support surface (8) comprises a conveyor belt for parallel displacement of the lower part (13) of the plant stems along the longitudinal direction (20). The lower part (13) of the plant stems exits at the rear of the device (1) and is placed in a swath of plant stems (16) on a field. The first horizontal support surface (7) comprises a conveyor belt for parallel displacement of the upper part (14) of the plant stems along the longitudinal direction (20). The upper part (14) of the plant stems exits at the rear of the device (1) and is placed on top of the swath of plant stems (16).

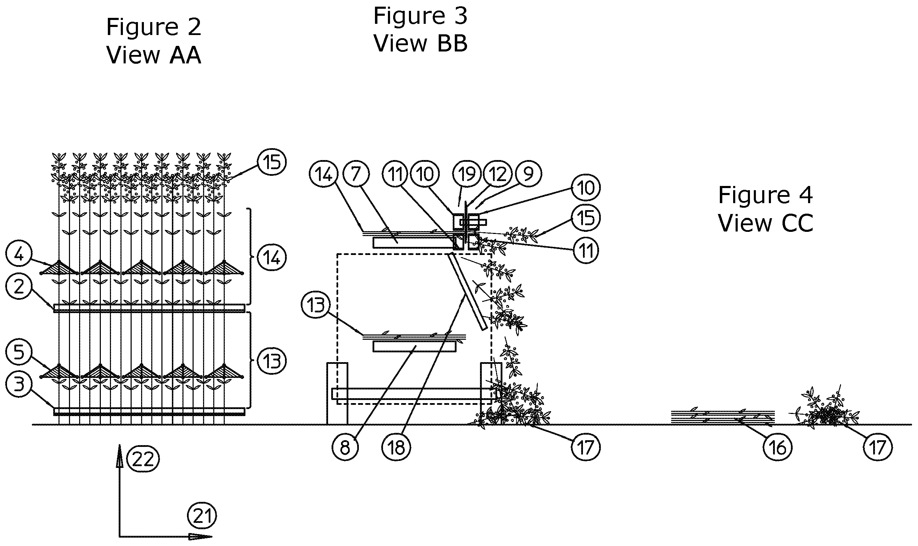

**Figure 2** shows a view along axis A-A of a device for cutting off tops of plant stems according to an embodiment of the present invention.

The first distributor (4) is positioned above the first horizontal cutter bar (2). The first horizontal cutter bar (2) divides plant stems into two lengths by mowing an upper part (14) of the plant stems. The tops (15) of the plant stems are still attached to the upper part (14) of the plant stems. The second distributor (5) is positioned below the first horizontal cutter bar (2) and above the second horizontal cutter bar (3). The second horizontal cutter bar (3) mows the plant stems above their roots. The part of the plant stems between the first horizontal cutter bar (2) and the second horizontal cutter bar (3) is the lower part (13) of the plant stems.

**Figure 3** shows a view along axis B-B of a device for cutting off tops of plant stems according to an embodiment of the present invention.

At the level of axis B-B, the upper part (14) of the plant stems is turned horizontally and the upper part (14) of the plant stems is supported by the first horizontal support surface (7). The upper parts (14) of the plant stems extend parallel to each other along the width direction (21). The figure shows how the first pair of cutting conveyor belts or cutting conveyor chains (9) and the first cutting means (12) are placed along the first horizontal support surface (7), the first cutting means (12) being positioned in a width direction (21) between the first horizontal support surface (7) and the first pair of cutting conveyor belts or cutting conveyor chains (9). The device (1) comprises an additional pair of cutting conveyor belts or cutting conveyor chains (19), comprising a first conveyor belt or conveyor chain (10) and a second conveyor belt or conveyor chain (11). The additional pair of cutting conveyor belts or cutting conveyor chains (19) is positioned according to the width direction (21) between the first cutting means (12) and the first horizontal support surface (7). Cut off tops (15) are discharged through a discharge gate (18) and fall next to the device (1). The lower part (13) of the plant stems is rotated horizontally and the lower part (13) of the plant stems is supported by the second horizontal support surface (8). The lower parts (13) of the plant stems extend parallel to each other along the width direction (21).

**Figure 4** shows a view along axis C-C of a device for cutting off tops of plant stems according to an embodiment of the present invention.

This figure shows how the lower parts (13) are laid out parallel to each other along the width direction (21) in a swath of plant stems (16) on a field. The upper parts (14) of the plant stems are laid parallel to each other along the width direction (21) on top of the swath of plant stems (16) on the field. The cut off tops (15) have fallen into a swath of plant tops (17) next to the swath of plant stems (16) on the field.

The numbered elements in the figures are:
- 1: Device
- 2: First horizontal cutter bar
- 3: Second horizontal cutter bar
- 4: First distributor
- 5: Second distributor
- 6: Mowing conveyor belts or mowing transport chains
- 7: First horizontal support surface
- 8: Second horizontal support surface
- 9: First pair of cutting conveyor belts or cutting conveyor chains
- 10: First conveyor belt or conveyor chain
- 11: Second conveyor belt or conveyor chain
- 12: First cutting means
- 13: Lower part of plant stem
- 14: Upper part of plant stem
- 15: Top of plant stem
- 16: Swath of plant stems
- 17: Swath of plant tops
- 18: Discharge gate
- 19: Additional pair of cutting conveyor belts or cutting conveyor chains
- 20: Longitudinal direction
- 21: Width direction
- 22: Height direction

## Claims

1. Device (1) for cutting off tops and/or roots of plant stems, comprising a first horizontal support surface (7), for supporting mown or pulled-out plant stems, and a first group of mowing conveyor belts and/or mowing conveyor chains (6), for parallel clamping and rotating of the mown or pulled-out plant stems from a standing to a lying position during transport of the mown or pulled-out plant stems to the first horizontal support surface, wherein the device comprises a first cutting means (12) for cutting off tops (15) and/or roots from plant stems, the device (1) being **characterised in that** it comprises a first pair of cutting conveyor belts or cutting conveyor chains (9), for clamping the mown or pulled-out plant stems during cutting, wherein the first pair of cutting conveyor belts or cutting conveyor chains (9) comprises a first conveyor belt or conveyor chain (10) and a second conveyor belt or conveyor chain (11), wherein the first pair of cutting conveyor belts or cutting conveyor chains (9) extend in a longitudinal direction (20) along the first support surface (7), and wherein the first cutting means (12) is positioned in a width direction (21), transverse to the longitudinal direction (20) and parallel to the first support surface (7), between the first support surface (7) and the first pair of cutting conveyor belts or cutting conveyor chains (9).

2. Device according to claim 1, **characterized in that** the device comprises an additional pair of cutting conveyor belts or cutting conveyor chains (19) for clamping the mown or pulled-out plant stems during cutting, the additional pair of cutting conveyor belts or cutting conveyor chains (19) comprising a first conveyor belt or conveyor chain (10) and a second conveyor belt or conveyor chain (11), the additional pair of cutting conveyor belts or cutting conveyor chains (19) extending longitudinally along the first support surface (7), and wherein the additional pair of cutting conveyor belts or cutting conveyor chains (19) is positioned widthwise between the first support surface (7) and the first cutting means.

3. Device according to claim 1 or 2, **characterized in that** the device comprises an additional cutting means, the additional cutting means being positioned according to the width direction (21) between the first cutting means and the first pair of cutting conveyor belts or cutting conveyor chains (9).

4. Device according to any of the preceding claims 1-3, **characterized in that** the device comprises a discharge gate (18) for discharging tops (15) and/or roots, wherein a surface formed by the discharge gate (18) forms an angle with the first support surface (7) and wherein the discharge gate (18) extends in a direction transverse to the longitudinal direction (20) away from the first support surface (7).

5. Device according to any of the preceding claims 1-4, **characterized in that** the device comprises a chopper for chopping tops (15) and/or roots.

6. Device according to any of the preceding claims 1-5, **characterized in that** the device comprises a discharge belt or screw conveyor for discharging tops (15) and/or roots.

7. Device according to any of the preceding claims 1-6, **characterized in that** the device comprises on a side of the first support surface (7), lying opposite a side along which the first cutting means is positioned, a second cutting means and a second pair of cutting conveyor belts or cutting conveyor chains, wherein the second pair of cutting conveyor belts or cutting conveyor chains comprises a first conveyor belt or conveyor chain (10) and a second conveyor belt or conveyor chain (11), the second pair of cutting conveyor belts or cutting conveyor chains extending longitudinally along the first support surface (7), and the second cutting means being positioned along the width direction (21) between the first support surface (7) and the second pair of cutting conveyor belts or cutting conveyor chains.

8. Device according to any of the preceding claims 1-6, **characterized in that** the device comprises a first horizontal mowing means, for dividing the plant stems into two lengths, a second horizontal support surface (8), for supporting a part of pulled-out plant stems that have been divided into two lengths, a second group of mowing conveyor belts and/or mowing transport chains, for parallel clamping and rotating of said part of pulled-out plant stems that have been divided into two lengths from a standing to a lying position while transporting said part of the pulled-out plant stems that have been divided into two lengths from said first horizontal mowing means to the second horizontal support surface (8), a second cutting means and a second pair of cutting conveyor belts or cutting conveyor chains, the second pair of cutting conveyor belts or cutting conveyor chains extending longitudinally along the second support surface (8), and wherein the second cutting means is positioned widthwise between the second support surface (8) and the second pair of cutting conveyor belts or cutting conveyor chains.

9. Device according to any of the preceding claims 1-8, **characterized in that** the first conveyor belt or conveyor chain (10) and the second conveyor belt or conveyor chain(11) of a pair of cutting conveyor belts or cutting conveyor chains are longitudinally offset from each other.

10. Method for cutting off tops (15) and/or roots from plant stems comprising:
- mowing or pulling out the plant stems;
- clamping and rotating the cut or pulled-out plant stems in parallel from a standing to a lying position while transporting the cut or pulled-out plant stems to a first horizontal support surface (7);
wherein tops (15) or roots are cut from the mown or pulled-out plant stems using a first cutting means, **characterised in that** the mown or pulled-out plant stems are clamped between a first pair of cutting conveyor belts or cutting conveyor chains (9), the first pair of cutting conveyor belts or cutting conveyor chains (9) comprising a first conveyor belt or conveyor chain (10) and a second conveyor belt or conveyor chain (11), the first pair of cutting conveyor belts or cutting conveyor chains (9) extending in a longitudinal direction (20) along the first support surface (7), and wherein the first cutting means is positioned in a width direction (21), transverse to the longitudinal direction (20) and parallel to the first support surface (7), between the first support surface (7) and the first pair of cutting conveyor belts or cutting conveyor chains (9).

11. Method according to claim 10, **characterized in that** the tops (15) and/or roots are discharged after being cut off with the aid of a discharge gate (18), wherein a surface formed by the discharge gate (18) forms an angle with the first support surface (7) and wherein the discharge gate (18) extends in a direction transverse to the longitudinal direction (20) away from the first support surface (7).

12. Method according to claim 10 or 11, **characterized in that** the tops (15) and the roots are cut from the pulled-out plant stems, the roots being cut from the pulled-out plant stems with the aid of a second cutting means, the pulled-out plant stems being clamped between a second pair of cutting conveyor belts or cutting conveyor chains, wherein the second pair of cutting conveyor belts or cutting conveyor chains comprises a first conveyor belt or conveyor chain (10) and a second conveyor belt or conveyor chain (10), the second pair of cutting conveyor belts or cutting conveyor chains extending longitudinally along the first support surface (7), wherein the second cutting means and the second pair of cutting conveyor belts or cutting conveyor chains are positioned on a side of the first support surface (7) opposite to a side along which the first cutting means is positioned, and wherein the second cutting means is positioned widthwise between the first support surface (7) and the second pair of cutting conveyor belts or cutting conveyor chains.

13. Method according to claim 10 or 11, **characterized in that** the method comprises the additional steps of dividing the plant stems into two lengths, clamping in parallel and rotating a part of the pulled-out plant stems that have been divided into two lengths from a standing to a lying position while transporting said part of the pulled-out plant stems that have been divided into two lengths to a second horizontal support surface (8) and cutting off roots by means of a second cutting means from said part of the pulled-out plant stems divided into two lengths, wherein the pulled-out plant stems that have been divided into two lengths are clamped between a second pair of cutting conveyor belts or cutting conveyor chains, wherein the second pair of cutting conveyor belts or cutting conveyor chains comprises a first conveyor belt or conveyor chain (10) and a second conveyor belt or conveyor chain (11), the second pair of cutting conveyor belts or cutting conveyor chains extending longitudinally along the second support surface (8), and wherein the second cutting means is positioned widthwise between the second support surface (8) and the second pair of cutting conveyor belts or cutting conveyor chains.

14. Method according to any of claims 10-13, **characterized in that** the tops (15) and/or roots of the mown or pulled-out plant stems are cut a second time with the aid of an additional cutting means, wherein the additional cutting means is positioned in the width direction (21) between the first cutting means and the first pair of cutting conveyor belts or cutting conveyor chains (9).

15. Use of a device according to any of claims 1-9 or a method according to any of claims 10-14 for cutting off tops (15) and/or roots of hemp stems.

## Patentansprüche

1. Vorrichtung (1) zum Abschneiden von Oberteilen und/oder Wurzeln von Pflanzenstängeln, eine erste horizontale Tragefläche (7) zum Tragen gemähter oder herausgezogener Pflanzenstängel und eine erste Gruppe von Mäherförderbändern und/oder Mäherförderketten (6) zum parallelen Umklammern und Drehen der gemähten oder herausgezogenen Pflanzenstängel von einer stehenden in eine liegende Position während des Transports der gemähten oder herausgezogenen Pflanzenstängel zu der ersten horizontalen Tragefläche umfassend, wobei die Vorrichtung ein erstes Schneidemittel (12) zum Abschneiden von Oberteilen (15) und/oder Wurzeln von Pflanzenstängeln umfasst, wobei die Vorrichtung (1) **dadurch gekennzeichnet ist, dass** sie ein erstes Paar aus Schneideförderbändern oder Schneideförderketten (9) zum Umklammern der gemähten oder herausgezogenen Pflanzenstängel während des Schneidens umfasst, wobei das erste Paar aus Schneideförderbändern oder Schneideförderketten (9) ein erstes Förderband oder eine erste Förderkette (10) und ein zweites Förderband oder eine zweite Förderkette (11) umfasst, wobei sich das erste Paar aus Schneideförderbändern oder Schneideförderketten (9) in einer Längsrichtung (20) entlang der ersten Tragefläche (7) erstreckt und wobei das erste Schneidemittel (12) in einer Breiterichtung (21) quer zu der Längsrichtung (20) und parallel zu der ersten Tragefläche (7) zwischen der ersten Tragefläche (7) und dem ersten Paar aus Schneideförderbändern oder Schneideförderketten (9) positioniert ist.

2. Vorrichtung nach Anspruch 1, **dadurch gekennzeichnet, dass** die Vorrichtung ein zusätzliches Paar aus Schneideförderbändern oder Schneideförderketten (19) zum Umklammern der gemähten oder herausgezogenen Pflanzenstängel während des Schneidens umfasst, wobei das zusätzliche Paar aus Schneideförderbändern oder Schneideförderketten (19) ein erstes Förderband oder eine erste Förderkette (10) und ein zweites Förderband oder eine zweite Förderkette (11) umfasst, wobei sich das zusätzliche Paar aus Schneideförderbändern oder Schneideförderketten (19) längs entlang der ersten Tragefläche (7) erstreckt und wobei das zusätzliche Paar aus Schneideförderbändern oder Schneideförderketten (19) in Breiterichtung zwischen der ersten Tragefläche (7) und dem ersten Schneidemittel positioniert ist.

3. Vorrichtung nach Anspruch 1 oder 2, **dadurch gekennzeichnet, dass** die Vorrichtung ein zusätzliches Schneidemittel umfasst, wobei das zusätzliche Schneidemittel gemäß der Breiterichtung (21) zwischen dem ersten Schneidemittel und dem ersten Paar aus Schneideförderbändern oder Schneideförderketten (9) positioniert ist.

4. Vorrichtung nach einem der vorhergehenden Ansprüche 1 bis 3, **dadurch gekennzeichnet, dass** die Vorrichtung eine Austrageklappe (18) zum Austragen von Oberteilen (15) und/oder Wurzeln umfasst, wobei eine Oberfläche, die durch die Austrageklappe (18) gebildet wird, einen Winkel mit der ersten Tragefläche (7) bildet und wobei sich die Austrageklappe (18) in einer Richtung quer zu der Längsrichtung (20) weg von der ersten Tragefläche (7) erstreckt.

5. Vorrichtung nach einem der vorhergehenden Ansprüche 1 bis 4, **dadurch gekennzeichnet, dass** die Vorrichtung einen Häcksler zum Häckseln von Oberteilen (15) und/oder Wurzeln umfasst.

6. Vorrichtung nach einem der vorhergehenden Ansprüche 1 bis 5, **dadurch gekennzeichnet, dass** die Vorrichtung ein Austrageband oder einen Schneckenförderer zum Austragen von Oberteilen (15) und/oder Wurzeln umfasst.

7. Vorrichtung nach einem der vorhergehenden Ansprüche 1 bis 6, **dadurch gekennzeichnet, dass** die Vorrichtung an einer Seite der ersten Tragefläche (7), gegenüber einer Seite liegend, an der das erste Schneidemittel positioniert ist, ein zweites Schneidemittel und ein zweites Paar aus Schneideförderbändern oder Schneideförderketten umfasst, wobei das zweite Paar aus Schneideförderbändern oder Schneideförderketten ein erstes Förderband oder eine erste Förderkette (10) und ein zweites Förderband oder eine zweite Förderkette (11) umfasst, wobei sich das zweite Paar aus Schneideförderbändern oder Schneideförderketten längs entlang der ersten Tragefläche (7) erstreckt und wobei das zweite Schneidemittel in der Breiterichtung (21) zwischen der ersten Tragefläche (7) und dem zweiten Paar aus Schneideförderbändern oder Schneideförderketten positioniert ist.

8. Vorrichtung nach einem der vorhergehenden Ansprüche 1 bis 6, **dadurch gekennzeichnet, dass** die Vorrichtung ein erstes horizontales Mähmittel zum Teilen der Pflanzenstängel in zwei Längen, eine zweite horizontale Tragefläche (8) zum Tragen eines Teils herausgezogener Pflanzenstängel, die in zwei Längen geteilt wurden, eine zweite Gruppe von Mähförderbändern und/oder Mähtransportketten zum parallelen Umklammern und Drehen des Teils der herausgezogenen Pflanzenstängel, die in zwei Längen geteilt wurden, von einer stehenden in eine liegende Position während des Transports des Teils der herausgezogenen Pflanzenstängel, die in zwei Längen geteilt wurden, von dem ersten horizontalen Mähmittel zu der zweiten horizontalen Tragefläche (8), ein zweites Schneidemittel und ein zweites Paar aus Schneideförderbändern oder Schneideförderketten umfasst, wobei sich das zweite Paar aus Schneideförderbändern oder Schneideförderketten längs entlang der zweiten Tragefläche (8) erstreckt und wobei das zweite Schneidemittel in Breiterichtung zwischen der zweiten Tragefläche (8) und dem zweiten Paar aus Schneideförderbändern oder Schneideförderketten positioniert ist.

9. Vorrichtung nach einem der vorhergehenden Ansprüche 1 bis 8, **dadurch gekennzeichnet, dass** das erste Förderband oder die erste Förderkette (10) und das zweite Förderband oder die zweite Förderkette (11) eines Paares aus Schneideförderbändern oder Schneideförderketten in Längsrichtung zueinander versetzt sind.

10. Verfahren zum Abschneiden von Oberteilen (15) und/oder Wurzeln von Pflanzenstängeln, Folgendes umfassend:
- Mähen oder Herausziehen der Pflanzenstängel,
- Umklammern und Drehen der gemähten oder herausgezogenen Pflanzenstängel parallel von einer stehenden in eine liegende Position während des Transports der geschnittenen oder herausgezogenen Pflanzenstängel zu einer ersten horizontalen Tragefläche (7),
wobei Oberteile (15) und/oder Wurzeln von den gemähten oder herausgezogenen Pflanzenstängeln mittels eines ersten Schneidemittels abgeschnitten werden, **dadurch gekennzeichnet ist, dass** die gemähten oder herausgezogenen Pflanzenstängel von einem ersten Paar aus Schneideförderbändern oder Schneideförderketten (9) umklammert werden, wobei das erste Paar aus Schneideförderbändern oder Schneideförderketten (9) ein erstes Förderband oder eine erste Förderkette (10) und ein zweites Förderband oder eine zweite Förderkette (11) umfasst, wobei sich das erste Paar aus Schneideförderbändern oder Schneideförderketten (9) in einer Längsrichtung (20) entlang der ersten Tragefläche (7) erstreckt und wobei das erste Schneidemittel (12) in einer Breiterichtung (21) quer zu der Längsrichtung (20) und parallel zu der ersten Tragefläche (7) zwischen der ersten Tragefläche (7) und dem ersten Paar aus Schneideförderbändern oder Schneideförderketten (9) positioniert ist.

11. Verfahren nach Anspruch 10, **dadurch gekennzeichnet, dass** die Oberteile (15) und/oder die Wurzel nach dem Abschneiden mit Hilfe einer Austrageklappe (18) ausgetragen werden, wobei eine Oberfläche, die durch die Austrageklappe (18) gebildet wird, einen Winkel mit der ersten Tragefläche (7) bildet und wobei sich die Austrageklappe (18) in einer Richtung quer zu der Längsrichtung (20) weg von der ersten Tragefläche (7) erstreckt.

12. Verfahren nach Anspruch 10 oder 11, **dadurch gekennzeichnet, dass** die Oberteile (15) und die Wurzeln von den herausgezogenen Pflanzenstängeln abgeschnitten werden, die Wurzeln mit Hilfe eines zweiten Schneidemittels von den herausgezogenen Pflanzenstängeln abgeschnitten werden, die herausgezogenen Pflanzenstängel von einem zweiten Paar aus Schneideförderbändern oder Schneideförderketten umklammert werden, wobei das zweite Paar aus Schneideförderbändern oder Schneideförderketten ein erstes Förderband oder eine erste Förderkette (10) und ein zweites Förderband oder eine zweite Förderkette (11) umfasst, wobei sich das zweite Paar aus Schneideförderbändern oder Schneideförderketten längs entlang der ersten Tragefläche (7) erstreckt, wobei das zweite Schneidemittel und das zweite Paar aus Schneideförderbändern oder Schneideförderketten an einer Seite der ersten Tragefläche (7) gegenüber einer Seite positioniert sind, an der das erste Schneidemittel positioniert ist, und wobei das zweite Schneidemittel in Breiterichtung zwischen der ersten Tragefläche (7) und dem zweiten Paar aus Schneideförderbändern oder Schneideförderketten positioniert ist.

13. Verfahren nach Anspruch 10 oder 11, **dadurch gekennzeichnet, dass** das Verfahren die zusätzlichen Schritte des Teilens der Pflanzenstängel in zwei Längen, des parallelen Umklammerns und Drehens eines Teils der herausgezogenen Pflanzenstängel, die in zwei Längen geteilt wurden, von einer stehenden in eine liegende Position während des Transports des Teils der herausgezogenen Pflanzenstängel, die in zwei Längen geteilt wurden, zu einer zweiten horizontalen Tragefläche (8) und des Abschneidens von Wurzeln mittels eines zweiten Schneidemittels von dem Teil der herausgezogenen Pflanzenstängel, die in zwei Längen geteilt wurden, umfasst, wobei die herausgezogenen Pflanzenstängel, die in zwei Längen geteilt wurden, von dem ersten Paar aus Schneideförderbändern oder Schneideförderketten umklammert werden, wobei das zweite Paar aus Schneideförderbändern oder Schneideförderketten ein erstes Förderband oder eine erste Förderkette (10) und ein zweites Förderband oder eine zweite Förderkette (11) umfasst, wobei sich das zweite Paar aus Schneideförderbändern oder Schneideförderketten längs entlang der zweiten Tragefläche (8) erstreckt und wobei das zweite Schneidemittel in Breiterichtung zwischen der zweiten Tragefläche (8) und dem zweiten Paar aus Schneideförderbändern oder Schneideförderketten positioniert ist.

14. Verfahren nach einem der Ansprüche 10 bis 13, **dadurch gekennzeichnet, dass** die Oberteile (15) und/oder Wurzeln der gemähten oder herausgezogenen Pflanzenstängel mit Hilfe eines zusätzlichen Schneidemittels ein zweites Mal geschnitten werden, wobei das zusätzliche Schneidemittel in der Breiterichtung (21) zwischen dem ersten Schneidemittel und dem ersten Paar aus Schneideförderbändern oder Schneideförderketten (9) positioniert ist.

15. Verwendung einer Vorrichtung nach einem der Ansprüche 1 bis 9 oder eines Verfahrens nach einem der Ansprüche 10 bis 14 zum Abschneiden von Oberteilen (15) und/oder Wurzeln von Hanfstängeln.

## Revendications

1. Dispositif (1) permettant de couper des têtes et/ou des racines de tiges végétales, comprenant une première surface de support horizontale (7), pour supporter des tiges végétales fauchées ou arrachées, et un premier groupe de bandes transporteuses de fauchage et/ou de chaînes transporteuses de fauchage (6), pour le serrage et le pivotement parallèles des tiges végétales fauchées ou arrachées d'une position debout à une position couchée pendant le transport des tiges végétales fauchées ou arrachées vers la première surface de support horizontale, dans lequel le dispositif comprend un premier moyen de coupe (12) pour couper des têtes (15) et/ou des racines de tiges végétales, le dispositif (1) étant **caractérisé par le fait qu'**il comprend une première paire de bandes transporteuses de coupe ou de chaînes transporteuses de coupe (9), pour serrer les tiges végétales fauchées ou arrachées pendant la coupe, dans lequel la première paire de bandes transporteuses de coupe ou de chaînes transporteuses de coupe (9) comprend une première bande transporteuse ou chaîne transporteuse (10) et une seconde bande transporteuse ou chaîne transporteuse (11), dans lequel la première paire de bandes transporteuses de coupe ou de chaînes transporteuses de coupe (9) s'étend dans une direction longitudinale (20) le long de la première surface de support (7), et dans lequel le premier moyen de coupe (12) est positionné dans une direction de largeur (21), transversale à la direction longitudinale (20) et parallèle à la première surface de support (7), entre la première surface de support (7) et la première paire de bandes transporteuses de coupe ou de chaînes transporteuses de coupe (9).

2. Dispositif selon la revendication 1, **caractérisé en ce que** le dispositif comprend une paire supplémentaire de bandes transporteuses de coupe ou de chaînes transporteuses de coupe (19) pour serrer les tiges végétales fauchées ou arrachées pendant la coupe, la paire supplémentaire de bandes transporteuses de coupe ou de chaînes transporteuses de coupe (19) comprenant une première bande transporteuse ou chaîne transporteuse (10) et une seconde bande transporteuse ou chaîne transporteuse (11), la paire supplémentaire de bandes transporteuses de coupe ou de chaînes transporteuses de coupe (19) s'étendant longitudinalement le long de la première surface de support (7), et dans lequel la paire supplémentaire de bandes transporteuses de coupe ou de chaînes transporteuses de coupe (19) est positionnée dans la direction de la largeur entre la première surface de support (7) et le premier moyen de coupe.

3. Dispositif selon la revendication 1 ou 2, **caractérisé en ce que** le dispositif comprend un moyen de coupe supplémentaire, le moyen de coupe supplémentaire étant positionné selon la direction de la largeur (21) entre le premier moyen de coupe et la première paire de bandes transporteuses de coupe ou de chaînes transporteuses de coupe (9).

4. Dispositif selon l'une des revendications 1 à 3 précédentes, **caractérisé en ce que** le dispositif comprend une trappe de décharge (18) pour décharger des têtes (15) et/ou des racines, dans lequel une surface formée par la trappe de décharge (18) forme un angle avec la première surface de support (7) et dans lequel la trappe de décharge (18) s'étend dans une direction transversale à la direction longitudinale (20) à l'opposé de la première surface de support (7).

5. Dispositif selon l'une quelconque des revendications précédentes 1 à 4, **caractérisé en ce que** le dispositif comprend un hachoir pour hacher des têtes (15) et/ou des racines.

6. Dispositif selon l'une quelconque des revendications précédentes 1 à 5, **caractérisé en ce que** le dispositif comprend une bande transporteuse d'évacuation ou une vis sans fin pour l'évacuation des têtes (15) et/ou des racines.

7. Dispositif selon l'une quelconque des revendications précédentes 1 à 6, **caractérisé en ce que** le dispositif comprend sur un côté de la première surface de support (7), situé à l'opposé d'un côté le long duquel le premier moyen de coupe est positionné, un second moyen de coupe et une seconde paire de bandes transporteuses de coupe ou de chaînes transporteuses de coupe, dans lequel la seconde paire de bandes transporteuses ou de chaînes transporteuses de coupe comprend une première bande transporteuse ou chaîne transporteuse (10) et une seconde bande transporteuse ou chaîne transporteuse (11), la seconde paire de bandes transporteuses ou de chaînes transporteuses de coupe s'étendant longitudinalement le long de la première surface de support (7), et le second moyen de coupe étant positionné le long de la direction de la largeur (21) entre la première surface de support (7) et la seconde paire de bandes transporteuses ou de chaînes transporteuses de coupe.

8. Dispositif selon l'une quelconque des revendications précédentes 1 à 6, **caractérisé en ce que** le dispositif comprend un premier moyen de fauchage horizontal, pour diviser les tiges végétales en deux longueurs, une seconde surface de support horizontale (8), pour supporter une partie des tiges végétales arrachées qui ont été divisées en deux longueurs, un second groupe de bandes transporteuses de fauchage et/ou de chaînes de transport de fauchage, pour le serrage et le pivotement parallèles de ladite partie de tiges végétales arrachées qui ont été divisées en deux longueurs d'une position debout à une position couchée pendant le transport de ladite partie des tiges végétales arrachées qui ont été divisées en deux longueurs depuis ledit premier moyen de fauchage horizontal jusqu'à la seconde surface de support horizontale (8), un second moyen de coupe et une seconde paire de bandes ou de chaînes transporteuses de coupe, la seconde paire de bandes ou de chaînes transporteuses de coupe s'étendant longitudinalement le long de la seconde surface de support (8), et dans lequel le second moyen de coupe est positionné dans la direction de la largeur entre la seconde surface de support (8) et la seconde paire de bandes ou de chaînes transporteuses de coupe.

9. Dispositif selon l'une quelconque des revendications précédentes 1 à 8, **caractérisé en ce que** la première bande transporteuse ou chaîne transporteuse (10) et la seconde bande transporteuse ou chaîne transporteuse (11) d'une paire de bandes transporteuses de coupe ou de chaînes transporteuses de coupe sont décalées longitudinalement l'une par rapport à l'autre.

10. Procédé permettant de couper des têtes (15) et/ou des racines de tiges végétales comprenant:
- le fauchage ou l'arrachage des tiges végétales;
- le serrage et le pivotement des tiges végétales coupées ou arrachées parallèlement depuis une position debout à une position couchée tout en transportant les tiges végétales coupées ou arrachées vers une première surface de support horizontale (7);
dans lequel des têtes (15) ou des racines sont coupées des tiges végétales fauchées ou arrachées à l'aide d'un premier moyen de coupe, **caractérisé en ce que** les tiges végétales fauchées ou arrachées sont serrées entre une première paire de bandes transporteuses de coupe ou de chaînes transporteuses de coupe (9), la première paire de bandes transporteuses de coupe ou de chaînes transporteuses de coupe (9) comprenant une première bande transporteuse ou chaîne transporteuse (10) et une seconde bande transporteuse ou chaîne transporteuse (11), la première paire de bandes transporteuses de coupe ou de chaînes transporteuses de coupe (9) s'étendant dans une direction longitudinale (20) le long de la première surface de support (7), et dans lequel le premier moyen de coupe est positionné dans une direction de largeur (21), transversale à la direction longitudinale (20) et parallèle à la première surface de support (7), entre la première surface de support (7) et la première paire de bandes transporteuses de coupe ou de chaînes transporteuses de coupe (9).

11. Procédé selon la revendication 10, **caractérisé en ce que** les têtes (15) et/ou les racines sont évacuées après avoir été coupées à l'aide d'une trappe d'évacuation (18), dans lequel une surface formée par la trappe d'évacuation (18) forme un angle avec la première surface de support (7) et dans lequel la trappe d'évacuation (18) s'étend dans une direction transversale à la direction longitudinale (20) à l'opposé de la première surface de support (7).

12. Procédé selon la revendication 10 ou 11, **caractérisé en ce que** les têtes (15) et les racines sont coupées des tiges végétales arrachées, les racines étant coupées des tiges végétales arrachées à l'aide d'un second moyen de coupe, les tiges végétales arrachées étant serrées entre une seconde paire de bandes transporteuses de coupe ou de chaînes transporteuses de coupe, dans lequel la seconde paire de bandes ou de chaînes transporteuses de coupe comprend une première bande ou chaîne transporteuse (10) et une seconde bande ou chaîne transporteuse (10), la seconde paire de bandes ou de chaînes transporteuses de coupe s'étendant longitudinalement le long de la première surface de support (7), dans lequel le second moyen de coupe et la seconde paire de bandes ou de chaînes transporteuses de coupe sont positionnés sur un côté de la première surface de support (7) opposé à un côté le long duquel le premier moyen de coupe est positionné, et dans lequel le second moyen de coupe est positionné dans la direction de la largeur entre la première surface de support (7) et la seconde paire de bandes ou de chaînes transporteuses de coupe.

13. Procédé selon la revendication 10 ou 11, **caractérisé en ce que le** procédé comprend les étapes supplémentaires consistant à diviser les tiges végétales en deux longueurs, à serrer parallèlement et à faire pivoter une partie des tiges végétales arrachées qui ont été divisées en deux longueurs d'une position debout à une position couchée tout en transportant ladite partie des tiges végétales arrachées qui ont été divisées en deux longueurs vers une seconde surface de support horizontale (8) et à couper des racines au moyen d'un second dispositif de coupe de ladite partie des tiges végétales arrachées qui ont été divisées en deux longueurs, dans lequel les tiges végétales arrachées qui ont été divisées en deux longueurs sont serrées entre une seconde paire de bandes transporteuses de coupe ou de chaînes transporteuses de coupe, dans lequel la seconde paire de bandes transporteuses de coupe ou de chaînes transporteuses de coupe comprend une première bande transporteuse ou chaîne transporteuse (10) et une seconde bande transporteuse ou chaîne transporteuse (11), la seconde paire de bandes transporteuses de coupe ou de chaînes transporteuses de coupe s'étendant longitudinalement le long de la seconde surface de support (8), et dans lequel le second moyen de coupe est positionné dans la direction de la largeur entre la seconde surface de support (8) et la seconde paire de bandes transporteuses de coupe ou de chaînes transporteuses de coupe.

14. Procédé selon l'une quelconque des revendications 10 à 13, **caractérisé en ce que** les têtes (15) et/ou les racines des tiges végétales fauchées ou arrachées sont coupées une seconde fois à l'aide d'un moyen de coupe supplémentaire, dans lequel le moyen de coupe supplémentaire est positionné dans la direction de la largeur (21) entre le premier moyen de coupe et la première paire de bandes transporteuses de coupe ou de chaînes transporteuses de coupe (9).

15. Utilisation d'un dispositif selon l'une quelconque des revendications 1 à 9 ou procédé selon l'une quelconque des revendications 10 à 14 pour couper des têtes (15) et/ou des racines de tiges de chanvre.
